(19) Europäisches Patentamt / European Patent Office / Office européen des brevets

(11) **EP 3 835 821 A1**

(12) **EUROPÄISCHE PATENTANMELDUNG**

(43) Veröffentlichungstag:
**16.06.2021 Patentblatt 2021/24**

(51) Int Cl.:
*G01S 11/02* (2010.01)          *G01S 13/74* (2006.01)
*H04L 9/32* (2006.01)           *H04L 29/06* (2006.01)
*F16P 3/14* (2006.01)           *G06F 21/64* (2013.01)
*H04W 12/00* (2021.01)

(21) Anmeldenummer: 19215728.7

(22) Anmeldetag: **12.12.2019**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
**KH MA MD TN**

(71) Anmelder: **Siemens Aktiengesellschaft**
**80333 München (DE)**

(72) Erfinder:
• **KILIAN, Lennart**
  **82131 Gauting (DE)**
• **SCHINDHELM, Corina Kim**
  **81539 München (DE)**

• **SCHWARZER, Stefan**
  **90451 Nürnberg (DE)**
• **HLADIK, Reinhard**
  **1210 Wien (AT)**
• **WAHRBICHLER, Joachim**
  **8043 Graz (AT)**
• **SCHRÖER, Guido**
  **81677 München (DE)**
• **GLÄNZER, Ulrike**
  **85579 Neubiberg (DE)**

(74) Vertreter: **Maier, Daniel Oliver**
**Siemens AG**
**Postfach 22 16 34**
**80506 München (DE)**

(54) **VERFAHREN UND VORRICHTUNG ZUR BESTIMMUNG EINER SICHEREN DISTANZ**

(57) Verfahren zur Bestimmung einer sicheren Distanz nach dem TWR-Prinzip zwischen einem drahtlos kommunizierenden Objekt-Transponder (T) und zumindest einem Anker-Gateway (G1-G3), welche jeweils Mittel zur Erfassung von Zeitstempeln aufweisen, **dadurch gekennzeichnet, dass** folgende Schritte ausgeführt werden:

a) Erfassen von Sende- und Empfangs-Zeitstempeln für eine jeweilige Kommunikations-Nachricht seitens des Transponders (T) und des zumindest einen Anker-Gateways (G1-G3),

b) Übertragen der jeweiligen Zeitstempel vom Transponder (T) und dem zumindest einen Anker-Gateway (G1-G3) mit zumindest einer jeweiligen Kontrollinformation an eine fehlersichere Rechenvorrichtung (F-CPU),

c) Durchführen von zumindest einer Überprüfung durch die fehlersichere Rechenvorrichtung (F-CPU) ausgewählt aus:

c1) Überprüfung der Richtigkeit der jeweiligen Zeitstempel anhand der zumindest einen Kontrollinformation,

c2) Überprüfung der errechneten Zeitdauer für die Bearbeitungszeiten des Transponders (T) und jener des zumindest einen Anker-Gateways (G1-G3) anhand bekannter Erfahrungswerte,

d) Bestimmen der sicheren Distanz mithilfe der überprüften Zeitstempel durch die fehlersichere Rechenvorrichtung (F-CPU),

wobei bei der Erfassung der Zeitstempel Zeitstempel-Fehler nur durch den Transponder (T) oder alternativ nur durch das eine Anker-Gateway (G1-G3) hervorgerufen werden.

FIG 2

## EP 3 835 821 A1

**Beschreibung**

Die Erfindung betrifft ein Verfahren und eine Vorrichtung zur Bestimmung einer sicheren Distanz nach dem TWR-Prinzip zwischen einem drahtlos kommunizierenden Objekt-Transponder und zumindest einem Anker-Gateway, welche jeweils Mittel zur Erfassung von Zeitstempeln aufweisen.

In Produktionssystemen werden häufig Schutzzäune zum Personenschutz eingesetzt, um beispielsweise Bedienungspersonal oder bewegte Objekte vor einem, in Betrieb befindlichen, bewegten Montage-Roboterarm zu schützen.

Schutzzäune benötigen allerdings Platz in der Produktionsanlage und können den Zugang zu Anlagen erschweren. Damit sind indirekt Produktionskosten verbunden, welche einen wirtschaftlichen Betrieb eines Produktionssystems unerwünscht beeinträchtigen.

Beispielsweise kann mit einer Laserentfernungsmessung oder visueller Erkennung mit Kameras ein virtueller Schutzzaun für gefährliche Produktionsmaschinen realisiert werden, was jedoch in der Regel sehr aufwändig, unflexibel und teuer ist.

Die Lokalisierung eines drahtlos kommunizierenden Objekt-Transponders, also die Berechnung einer absoluten Position im Raum (2D oder 3D) durch ein funkbasiertes Lokalisierungssystem mit Standardkomponenten gilt im Stand der Technik allerdings als unsicher.

Die berechnete Position kann durch Hardware- und/oder Software-Fehler der zum Einsatz kommenden Komponenten oder durch physikalische Effekte, welche beispielsweise durch den Funckanal hervorgerufen werden können, verfälscht werden.

Solche Effekte können durch Funkkanäle, welche auf keiner direkten Sichtverbindung basieren, hervorgerufen werden. Durch Signalreflektionen kann es zu Mehrwegausbreitung und in weiterer Folge zum Mehrfachempfang desselben Sendesignals, jedoch mit unterschiedlichen Laufzeiten kommen.

Eine Verbesserung der Laufzeitmessung kann durch das bekannte TWR-Verfahren (englisch "Two Way Ranging", Zweiwege-Entfernungsmethode) erreicht werden. Die Zweiwege-Entfernungsmethode bestimmt die Signallaufzeit (Flugzeit) des UWB-HF-Signals und berechnet dann die Entfernung zwischen den Knoten, indem die Zeit mit der Lichtgeschwindigkeit multipliziert wird. Der TWR-Prozess wird zwischen einem Transponder und einem angeforderten Anker angewendet, es soll zu einem bestimmten Zeitpunkt nur ein Anker am TWR beteiligt sein. Unter einem Anker wird eine stationäre Funkeinheit mit bekannter Position verstanden.

Es ist jedoch derzeit kein Ortungsverfahren mithilfe eines Funksystems bekannt, mit welchem sicherheitsrelevante Aufgaben, wie beispielsweise der Verzicht auf Schutzzäune bei Produktionsanlagen, realisiert werden können, da die Bestimmung insbesondere der Übertragungsparameter eines Funkkanals nicht hinreichend verlässlich ist, um beispielsweise in einem Produktionssystem eingesetzt zu werden und bei einem unerwünschten Eingriff das Produktionssystem abzuschalten und dadurch die Personen- bzw. Objektsicherheit zu gewährleisten.

Es ist Aufgabe der Erfindung ein Verfahren und eine Vorrichtung zur Bestimmung einer sicheren Distanz zwischen einem drahtlos kommunizierenden Objekt-Transponder und einem Anker-Gateway bereitzustellen.

Dabei kann der drahtlos kommunizierende Objekt-Transponder beispielsweise von einer Person, das heißt dem Bedienungspersonal, getragen werden. Natürlich kann auch ein Objekt, wie ein autonom fahrendes Fahrzeug mit einem Objekt-Transponder ausgestattet sein, um dieses Fahrzeug beispielsweise vor einer Kollision zu schützen.

Die Schutzzone ist eine virtuelle Zone, durch welche sichergestellt werden kann, dass bei Eingriff in diese Zone ein Schutzmechanismus aktiviert wird, beispielsweise indem des eingreifenden Objekts wie ein Roboterarm unmittelbar gestoppt wird. Mit anderen Worten beschreibt der Schutzradius der Schutzzone jenen minimalen Radius, in welche sich der Transponder mit Sicherheit befindet, das heißt verlässlich nicht außerhalb befindet.

Dadurch können beispielsweise große Anlagen ohne Schutzzäune realisiert werden, in denen gefährliche Maschinen automatisch abgeschaltet werden, wenn sich ein Arbeiter, der mit einem Objekt-Transponder ausgestattet ist, der Maschine soweit nähert, dass der Schutzradius den gefährlichen Bereich schneidet. Dies ist günstig, da nur jener Teil der Anlage mit der betroffenen Maschine und nicht die ganze Anlage von der Sicherheitsmaßnahme betroffen ist.

Eine fehlersicher arbeitende Recheneinheit (F-CPU) als sicherheitszertifizierte Komponente führt beispielweise mittels zweier unabhängiger Rechenvorrichtungen jeweils die gleichen Rechenoperationen aus, vergleicht deren Ergebnisse miteinander und stellt bei einer Übereinstimmung ein als sicher geltendes Ergebnis bereit. Eine fehlersicher arbeitende Recheneinheit kann sicherheits-relevante und nicht-sicherheits-relevante Anwendungsprogramme ausführen und ist bis zu SIL3 gemäß IEC 61508 und Cat4 PLd gemäß ISO 13849-1 zertifiziert.

Die IEC 61508 ist eine internationale Normenserie zur Entwicklung von elektrischen, elektronischen und programmierbaren elektronischen Systemen, die eine Sicherheitsfunktion ausführen. Sie wird von der Internationalen Elektrotechnischen Kommission (IEC) herausgegeben und trägt den Titel Funktionale Sicherheit sicherheitsbezogener elektrischer/elektronischer/programmierbarer elektronischer Systeme.

Die Norm EN ISO 13849 ist eine sicherheitsspezifische Norm, welche sich mit Gestaltungsleitsätzen zu sicherheitsbezogenen Teilen von Steuerungen beschäftigt.

Die erfindungsgemäße Aufgabe wird durch ein Verfahren eingangs genannter Art gelöst, wobei folgende Schritte ausgeführt werden:

a) Erfassen von Sende- und Empfangs-Zeitstempeln für eine jeweilige Kommunikations-Nachricht seitens des Transponders und des einen Anker-Gateways,

b) Übertragen der jeweiligen Zeitstempel vom Transponder und dem einen Anker-Gateway mit zumindest einer jeweiligen Kontrollinformation an eine fehlersichere Rechenvorrichtung, wobei die Kontrollinformation vorzugsweise eine Paritätsinformation ist

c) Durchführen von zumindest einer Überprüfung durch die fehlersichere Rechenvorrichtung ausgewählt aus:

c1) Überprüfung der Richtigkeit der jeweiligen Zeitstempel anhand der zumindest einen Kontrollinformation,

c2) Überprüfung der errechneten Zeitdauer für die Bearbeitungszeiten des Transponders und jener des einen Anker-Gateways anhand bekannter Erfahrungswerte,

d) Bestimmen der sicheren Distanz mithilfe der überprüften Zeitstempel durch die fehlersichere Rechenvorrichtung.

wobei bei der Erfassung der Zeitstempel Zeitstempel-Fehler nur durch den Transponder oder alternativ nur durch das eine Anker-Gateway hervorgerufen werden.

Dadurch wird erreicht, dass die zu bestimmende Distanz fehlersicher berechnet wird, da jede Rechenoperation zur Bestimmung der Distanz in einer fehlersicher arbeitenden Rechenvorrichtung durchgeführt werden. Die Erfassung der Basisdaten, das heißt der Zeitstempel erfolgt durch den Transponder beziehungsweise die Anker-Gateways und die Übertragung der Zeitstempel wird durch eine jeweilige Kontrollinformation gesichert. Daher kann beispielsweise ein Fehler bei der Erzeugung, der Übertragung und der Berechnung festgestellt werden und eine Warnung ausgegeben werden, dass die Sicherheit einer durchgeführten Berechnung aktuell nicht sichergestellt ist.

In einer Weiterbildung der Erfindung ist es vorgesehen, dass ein Indikatorwert für eine sichere Distanzmessung durch folgenden Zusammenhang mittels der fehlersicheren Rechenvorrichtung ermittelt wird, welcher ein Maß für die Sicherheit der berechneten sicheren Distanz ist:

$$\mathrm{safe\_twr\_value} = \frac{\left(\mathrm{T_{Round1}} - \mathrm{T_{GW\_REPLY}}\right) - \left(\mathrm{T_{Round2}} - \mathrm{T_{TAG\_REPLY}}\right)}{2}$$

wobei

$$\mathrm{T_{Round1}} = 2 \cdot \mathrm{TOF} + \mathrm{T_{GW\_REPLY}}$$

$$\mathrm{T_{Round2}} = 2 \cdot \mathrm{TOF} + \mathrm{T_{TAG\_REPLY}}$$

$$\mathrm{T_{GW\_REPLY}} = \mathrm{TS_{GW\_TX\_RESP}} - \mathrm{TS_{GW\_RX\_POLL}}$$

$$\mathrm{T_{TAG\_REPLY}} = \mathrm{TS_{TAG\_TX\_FINAL}} - \mathrm{TS_{TAG\_RX\_RESP}}$$

Dadurch kann auf eine einfache Weise festgestellt werden, dass die Erzeugung der Zeitstempel plausibel erfolgt ist.

In einer Weiterbildung der Erfindung ist es vorgesehen, dass der drahtlosen Kommunikation zwischen dem Objekt-Transponder und dem einen Anker-Gateway für eine Lokalisierungs-Abfrage eine Abfrage-, eine Antwort- und eine End-Nachricht versendet und empfangen wird.

Dadurch kann das Verfahren auf ein einfaches und bekanntes Verfahren zur Zwei-Wege-Vermessung aufbauen.

In einer Weiterbildung der Erfindung ist es vorgesehen, dass eine Vorgangsnummer von der fehlersicheren Rechenvorrichtung erzeugt wird, welche mit der Antwort-Nachricht übertragen wird.

In einer Weiterbildung der Erfindung ist es vorgesehen, dass die Vorgangsnummer eine Zufallszahl ist.

Dadurch wird die Manipulationssicherheit erhöht, da die Kenntnis der Zahl vonnöten ist, um sie einem Anker-Gateway zuordnen zu können.

In einer Weiterbildung der Erfindung ist es vorgesehen, dass die Kontrollinformation eine Paritätsinformation ist.

Dadurch wird eine technisch einfache Umsetzung erreicht, bei welcher Fehler oder Manipulationen bei der Übertragung der Zeitstempel entdeckt werden können, ohne die Zeitstempel selbst zu manipulieren, wie dies beispielsweise bei einer Verschlüsselung auftreten könnte und im Widerspruch zum erfindungsgemäßen Ansatz steht, dass Berechnungen nur von einer fehlersicheren Rechenvorrichtung ausgeführt werden.

In einer Weiterbildung der Erfindung ist es vorgesehen, dass bei der Berechnung der Kontrollinformation eine Kommunikations-Adresse des Objekt-Transponders oder des zumindest einen Anker-Gateways berücksichtigt wird.

Dadurch wird die Manipulationssicherheit weiter erhöht, da eine zusätzliche Überprüfung der im System bekannten Anker-Gateways erfolgen kann.

In einer Weiterbildung der Erfindung ist es vorgesehen, dass zu einem ersten und einem zweiten Zeitpunkt jeweils sichere Distanzen bestimmt werden, aus welchen eine Bewegungsgeschwindigkeit des Transponders ermittelt wird, und die Bewegungsgeschwindigkeit mit einem vordefinierten Grenzwert verglichen wird.

Dadurch wird eine weitere Plausibilisierung der Distanzmessungen erreicht und die Zuverlässigkeit des Verfahrens weiter gesteigert.

Die Aufgabe der Erfindung wird auch durch eine Vorrichtung eingangs genannter Art gelöst, welche dazu eingerichtet ist, die Schritte des erfindungsgemäßen Verfahrens auszuführen.

Die Erfindung wird nachfolgend anhand von in den beigeschlossenen Zeichnungen dargestellten Ausführungsbeispiele näher erläutert. In den Zeichnungen zeigt:

Fig. 1 ein Ausführungsbeispiel für ein Warn- und Schutzsystem,

Fig. 2 ein Beispiel für ein erfindungsgemäßes Ablaufdiagramm zur sicheren Bestimmung der Distanz,

Fig. 3 ein Beispiel für eine Abfrage-Nachricht,

Fig. 4 ein Beispiel für eine TWR-Antwort-Nachricht,

Fig. 5 ein Beispiel für eine erfindungsmäße Antwort-Nachricht,

Fig. 6 ein Beispiel für eine TWR-End-Nachricht,

Fig. 7 ein Beispiel für eine erfindungsmäße End-Nachricht.

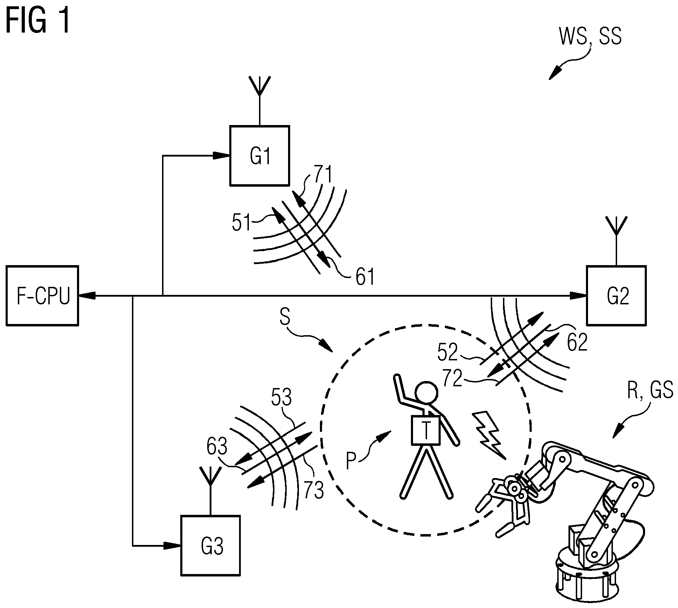

In **Fig. 1** ist ein Ausführungsbeispiel für ein Warn- und Schutzsystem dargestellt.

Von einem Objekt-Transponder oder "Tag" T, welcher beispielsweise von einer Person P am Körper getragen wird, wird ein jeweiliges Abfrage-Signal P1-P3 in einen Funkkanal abgestrahlt, welches eine Abfrage Nachricht MP (englisch "Poll") umfasst.

Das jeweilige Abfrage-Signal P1-P3 wird vom jeweiligen Gateway G1-G3 vom Funkkanal empfangen, weiterverarbeitet und als jeweiliges Antwort-Signal R1-R3 wieder abgestrahlt, welches eine jeweilige Antwort-Nachricht MR (englisch "response") umfasst.

Die Antwort-Signale R1-R3 werden vom Objekt-Transponder T empfangen, weiterverarbeitet und als jeweiliges End-Signal F1-F3 wieder in den Funkkanal abgestrahlt, welches die jeweilige Antwort-Nachricht MF (englisch "final") umfasst.

Die End-Signale F1-F3 werden vom jeweiligen Gateway G1-G3 empfangen und an eine fehlersicher rechnende Rechenvorrichtung F-CPU übergeben, welche den Schutzradius $r_P$ einer Schutzzone S bestimmt.

Wenn sich ein Gefahrensystem beispielsweise in Form einer Produktionsanlage in Betrieb befindet, und dabei ein Roboter-arm R der Produktionsanlage in die Schutzzone S eingreift, wird für den Roboterarm ein Abbruchvorgang für dessen Betrieb ausgelöst, wodurch der Roboterarm unverzüglich zum Stillstand kommt.

Der Eingriff in die Schutzzone S kann beispielsweise dadurch erfolgen, dass sich die Person P dem Roboterarm R unerlaubt nahe annähert, und der Personenschutz nicht mehr sicher gewährleistet ist.

Ein Verfahren zur Bestimmung einer sicheren Distanz $d_{TWR}$ nach dem TWR-Prinzip zwischen einem drahtlos kommunizierenden Objekt-Transponder T und zumindest einem Anker-Gateway G1-G3, welche jeweils Mittel zur Erfassung von Zeitstempeln aufweisen, wird im Weiteren anhand eines Ausführungsbeispiels der Erfindung beschrieben.

Allgemein werden dabei folgende Schritte ausgeführt:

a) Erfassen von Sende- und Empfangs-Zeitstempeln $TS_{TAG\_TX\_POLL}$, $TS_{GW\_RX\_POLL}$, $TS_{GW\_TX\_RESP}$, $TS_{TAG\_RX\_RESP}$, $TS_{TAG\_TX\_FINAL}$, $TS_{GW\_RX\_FINAL}$ für eine jeweilige Kommunikations-Nachricht seitens des Transponders T und des zumindest einen Anker-Gateways G1-G3,

b) Übertragen der jeweiligen Zeitstempel $TS_{TAG\_TX\_POLL}$, $TS_{GW\_RX\_POLL}$, $TS_{GW\_TX\_RESP}$, $TS_{TAG\_RX\_RESP}$, $TS_{TAG\_TX\_FINAL}$, $TS_{GW\_RX\_FINAL}$ vom Transponders T und dem zumindest einen Anker-Gateway G1-G3 mit zumindest einer jeweiligen Kontrollinformation CRC1, CRC2, beispielsweise eine Paritätsinformation, an eine fehlersichere Rechenvorrichtung F-CPU,

c) Durchführen von zumindest einer Überprüfung durch die fehlersichere Rechenvorrichtung (F-CPU) ausgewählt aus:

c1) Überprüfung der Richtigkeit der jeweiligen Zeitstempel $TS_{TAG\_TX\_POLL}$, $TS_{GW\_RX\_POLLn}$ $TS_{GW\_TX\_RESP}$, $TS_{TAG\_RX\_RESP}$, $TS_{TAG\_TX\_FINAL}$, $TS_{GW\_RX\_FINAL}$ anhand der zumindest einen Kontrollinformation CRC1, CRC2,

c2) Überprüfung der errechneten Zeitdauer für die Bearbeitungszeiten des Transponders T und jener des zumindest einen Anker-Gateways G1-G3 anhand bekannter Erfahrungswerte,

d) Bestimmen der sicheren Distanz $d_{TWR}$ mithilfe der überprüften Zeitstempel $TS_{TAG\_TX\_POLL}$, $TS_{GW\_RX\_POLL}$, $TS_{GW\_TX\_RESP}$, $TS_{TAG\_RX\_RESP}$, $TS_{TAG\_TX\_FINAL}$, $TS_{GW\_RX\_FINAL}$ durch die fehlersichere Rechenvorrichtung F-CPU,

wobei bei der Erfassung der Zeitstempel $TS_{TAG\_TX\_POLL}$, $TS_{GW\_RX\_POLL}$, $TS_{GW\_TX\_RESP}$, $TS_{TAG\_RX\_RESP}$, $TS_{TAG\_TX\_FINAL}$, $TS_{GW\_RX\_FINAL}$ Zeitstempel-Fehler nur durch den Transponder T oder alternativ nur durch das zumindest eine Anker-Gateway G1-G3 hervorgerufen werden.

Daraus kann ein Indikatorwert safe_twr_value für eine sichere Distanzmessung durch folgenden Zusammenhang mittels der fehlersicheren Rechenvorrichtung F-CPU ermittelt wird, welcher ein Maß für die Sicherheit der berechneten sicheren Distanz $d_{TWR}$ ist:

$$\text{safe\_twr\_value} = \frac{\left(T_{Round1} - T_{GW\_REPLY}\right) - \left(T_{Round2} - T_{TAG\_REPLY}\right)}{2}$$

wobei

$$T_{Round1} = 2 \cdot TOF + T_{GW\_REPLY}$$

$$T_{Round2} = 2 \cdot TOF + T_{TAG\_REPLY}$$

$$T_{GW\_REPLY} = TS_{GW\_TX\_RESP} - TS_{GW\_RX\_POLL}$$

$$T_{TAG\_REPLY} = TS_{TAG\_TX\_FINAL} - TS_{TAG\_RX\_RESP}$$

Während der drahtlosen Kommunikation wird zwischen dem Objekt-Transponder T und dem zumindest einen Anker-Gateway G1-G3 für eine Lokalisierungs-Abfrage eine Abfrage-, eine Antwort- und eine End-Nachricht MP, MR, MF versendet und empfangen.

Außerdem kann eine Vorgangsnummer RNR von der fehlersicheren Rechenvorrichtung F-CPU erzeugt werden, welche mit der Antwort-Nachricht MR übertragen wird. Die Vorgangsnummer RNR ist beispielsweise eine Zufallszahl.

Bei der Berechnung der Kontrollinformation CRC1, CRC2 kann ferner eine Adresse des Objekt-Transponder T oder des zumindest einen Anker-Gateway G1-G3 berücksichtigt werden.

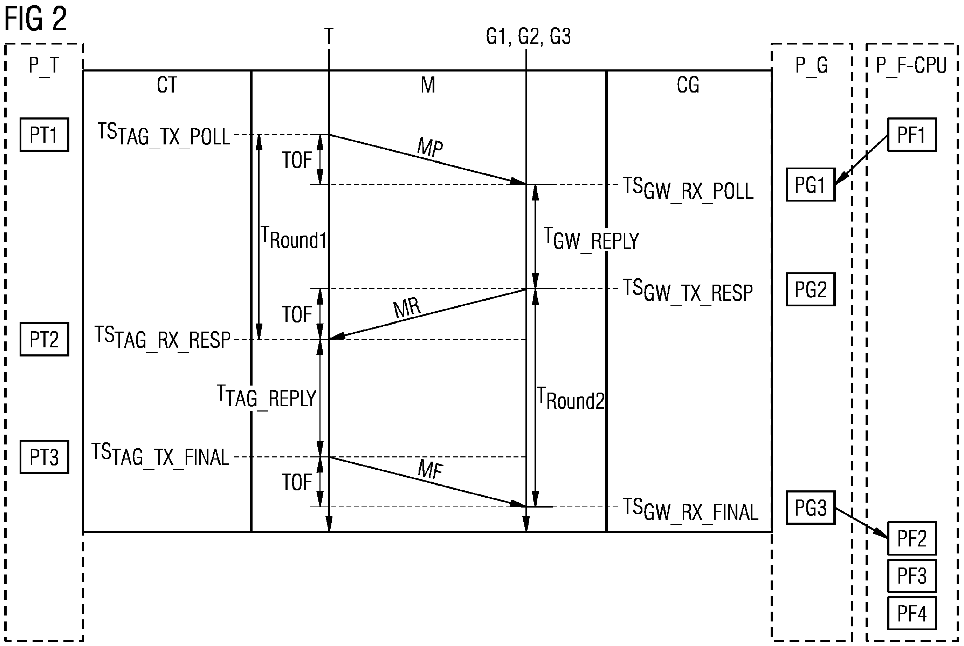

Fig. 2 stellt ein Beispiel für ein Ablaufdiagramm zur Bestimmung der sicheren Distanz $d_{TWR}$ dar, anhand dessen die Erfindung im Detail beschrieben wird.

Eine sichere Distanz ist eine Entfernung, welche ohne systematische Fehler bei einer Laufzeitmessung ermittelt wird.

Unerwünschte Einflüsse, beispielsweise durch eine schwankende oder ungenaue Zeitbasis, welche bei einer Laufzeitmessung von Signalen auftreten können, werden durch eine entsprechende "sichere" Berechnung systemisch ausgeschlossen.

Die Position des Objekt-Transponders T (auch englisch "tag") in einem dreidimensionalen Raum soll gemäß den weiteren Ausführungen ermittelt werden, wobei die Anker- beziehungsweise Gateway-Transponder G1, G2, G3 mit bekannter Position herangezogen werden.

Die Abfragenachricht MP wird am Transponder T beziehungsweise Tag zu einem Zeitpunkt mit einem Zeitstempel $TS_{TAG\_TX\_POLL}$ abgesendet und am jeweiligen Anker-Gateway G1-G3 zu einem Zeitpunkt mit einem Zeitstempel $TS_{GW\_RX\_POLL}$ empfangen.

Die Übertragung der Abfragenachricht MP im Funkkanal zwischen dem Transponder T und dem jeweiligen Gateway der drei Gateways G1-G3 benötigt eine Dauer $TOF_1$ (englisch "time-offlight").

Die Abfragenachricht MP wird vom Anker-Gateway innerhalb einer Zeitspanne $T_{GW\_REPLY}$ verarbeitet und eine entsprechende Antwortnachricht MR vom Anker-Gateway zum Transponder T zu einem Zeitpunkt mit einem Zeitstempel $TS_{GW\_TX\_RESP}$ gesendet und am Tag zu einem Zeitpunkt mit einem Zeitstempel $TS_{TAG\_RX\_RESP}$ empfangen.

Die Zeitspanne $T_{GW\_REPLY}$ wird durch den Takt des Gateway-Komponenten $T_{GW\_CLK}$ bestimmt und ist innerhalb gewisser und bekannter Grenzen bekannt.

Somit kann angegeben werden:

$$T_{GW\_REPLY} = TS_{GW\_TX\_RESP} - TS_{GW\_RX\_POLL}$$

Die Zeitspanne $T_{Round1}$ bezeichnet die Signallaufzeit zwischen dem Zeitstempel $TS_{TAG\_TX\_POLL}$ und dem Zeitstempel $TS_{TAG\_RX\_RESP}$.

$$T_{Round1} = TS_{TAG\_RX\_RESP} - TS_{TAG\_TX\_POLL}$$

Die Übertragung im Funkkanal benötigt die Dauer $TOF_2$. Falls der Transponder T nicht bewegt wurde, entspricht $TOF_1 = TOF_2$. Die Antwortnachricht MR wird vom Tag innerhalb einer Zeitspanne $T_{TAG\_REPLY}$ verarbeitet und eine entsprechende Endnachricht MF vom Anker-Gateway zum Transponder T zu einem Zeitpunkt mit einem Zeitstempel $TS_{TAG\_TX\_FINAL}$ gesendet.

Die Zeitspanne $T_{TAG\_REPLY}$ wird durch den Takt des Gateway-Komponenten $T_{TAG\_CLK}$ bestimmt und ist innerhalb gewisser und bekannter Grenzen bekannt.

Die Übertragung im Funkkanal benötigt die Dauer $TOF_3$. Falls der Transponder T nicht bewegt wurde, entspricht $TOF_1 = TOF_2 = TOF_3$.

Das Anker-Gateway empfängt die Endnachricht MF zu einem Zeitpunkt mit einem Zeitstempel $TS_{GW\_RX\_FINAL}$.

Die Zeitspanne $T_{Round2}$ bezeichnet die Signallaufzeit zwischen dem Zeitstempel $TS_{GW\_TX\_RESP}$ und dem Zeitstempel $TS_{GW\_RX\_FINAL}$.

$$T_{Round2} = TS_{GW\_RX\_FINAL} - TS_{GW\_TX\_RESP}$$

Somit kann angegeben werden:

$$T_{TAG\_REPLY} = TS_{TAG\_TX\_FINAL} - TS_{TAG\_RX\_RESP}$$

Die Zeitstempel werden von einem Tag-Zähler CT im Objekt-Transponder beziehungsweise einem Gateway-Zähler CG im Anker-Transponder erfasst.

Aus den ermittelten Laufzeiten kann die Signallaufzeit im Funkkanal $TOF = TOF_1 = TOF_2 = TOF_3$ und über die Lichtgeschwindigkeit c die entsprechende Distanz $d_{TWR}$ bestimmt werden.

$$TOF = \frac{T_{Round1} \cdot T_{Round2} - T_{GW\_REPLY} \cdot T_{TAG\_REPLY}}{T_{Round1} + T_{Round2} + T_{GW\_REPLY} + T_{TAG\_REPLY}}$$

$$d_{TWR} = c \cdot TOF$$

Die Rechenvorrichtung F-CPU kann nun einen ersten Fehler erkennen, sofern die für die Distanzberechnung benötigten Zeitstempel des Transponders und der Gateways falsifiziert werden.

Dabei wird angenommen, dass nur Fehler seitens des Transponders T oder alternativ nur Fehler seitens eines der Gateways G1-G3 zur selben Zeit passieren, und nicht Fehler seitens des Transponders und eines Gateways gleichzeitig.

Unter einem systemischen Fehler wird ein Fehler verstanden, welcher die Erzeugung oder Erfassung von Zeitstempeln ungünstig beeinflusst, beispielsweise eine unerwünscht abweichende Zeitbasis in einem elektronischen Bauteil, welche durch wechselnde Temperatur, Alterung, Bauteiltoleranzen oder ähnliches hervorgerufen werden kann. Ein solcher Fehler kann zwischen einzelnen Komponenten in einem System, wie dem Transponder T und einem Gateway G1-G3 auftreten, indem sich eine lokale Zeitbasis in Form einer Takterzeugung für eine digitale Elektronikschaltung ungleichmäßig verändert.

Zeitstempel oder eine Drift eines jeweiligen Zeitgeber-Takts in einer Komponente wie dem Transponder T1 oder den Gateways G1-G3 sind voneinander unabhängig. Folglich beeinflusst ein Fehler nur den eigenen Zeitstempel und nicht jenen der anderen Komponenten.

TWR verfügt über eine integrierte Fehlererkennung. Dabei wird von folgenden Zusammenhängen ausgegangen:

$$T_{Round1} = 2 \cdot TOF + T_{GW\_REPLY}$$

$$T_{Round2} = 2 \cdot TOF + T_{TAG\_REPLY}$$

Eine Abweichung von TOF durch Fehler im Transponder oder im Gateway kann nun berechnet werden durch

$$safe\_twr\_value = \frac{\left(T_{Round1} - T_{GW\_REPLY}\right) - \left(T_{Round2} - T_{TAG\_REPLY}\right)}{2}$$

Ein TWR-Ergebnis ist für $safe_{twr_{value}}$ < safe_twr_value_limit mit safe_twr_value_limit = 825 ps gültig, ansonsten ist das Ergebnis ungültig.

Mit dem Wert safe_twr_value_limit = 825 ps ist eine Takt-Drift für den Transponder mit < $\pm$200 ppm beschränkt.

In der Figur ist ferner ein Programm P_T des Transponders T mit Verfahrensschritten PT1-PT3 für den Transponder T als Teil des Ablaufdiagramms vereinfacht dargestellt.

Außerdem ist ein Programm P_G eines jeweiligen Gateways G1-G3 mit Verfahrensschritten PG1-PG3 für das jeweilige Gateway G1-G3 erkennbar, sowie ein Programm P_F der fehlersicher rechnenden Vorrichtung F-CPU mit Verfahrensschritten PF1-PF4 für die Rechenvorrichtung F-CPU.

Im Schritt PT1 wird die Abfrage-Nachricht MP durch den Transponder T initiiert und gesendet.

Das jeweilige Gateway empfängt im Schritt PG1 die Abfrage-Nachricht MP und bestimmt den Sendezeitpunkt für die Antwortnachricht MR.

Im Schritt PF1 wird eine Zufallszahl RNR durch die fehlersicher rechnende Vorrichtung F-CPU erzeugt und an das jeweilige Gateway gesendet.

Das Gateway sendet eine Antwort-Nachricht MR im Schritt PG2 an den Transponder T, welche die Zufallszahl RNR enthält.

Die Antwort-Nachricht MR wird im Schritt PT2 durch den Transponder T empfangen und der Sendezeitpunkt für die End-Nachricht MF errechnet.

Der Transponder T bestimmt im Schritt PT3 aus den Zeitstempeln und der Adresse des Transponders T, und der Zufallszahl eine erste Prüfsumme CRC1 und sendet eine End-Nachricht MF vom Transponder T an das Gateway, welche die erste Prüfsumme CRC1 enthält.

Im Schritt PG3 empfängt das Gateway die End-Nachricht MF und bestimmt aus den Zeitstempeln und der Adresse des Gateways und der ersten Prüfsumme CRC1 eine zweite Prüfsumme CRC2 und übermittelt die Zeitstempel und die Adresse des Gateways und des Transponders T, sowie die zweite Prüfsumme CRC2 an die Vorrichtung F-CPU.

Im Schritt PF2 errechnet die Vorrichtung F-CPU eine dritte Prüfsumme CRC3 und vergleicht sie mit der zweiten Prüfsumme CRC2.

Im Schritt PF3 errechnet die Vorrichtung F-CPU einen sicheren Wert safe_twr_value für die Entfernung zwischen dem Gateway und dem Transponder T mittels des TWR-Verfahrens und überprüft die Werte auf Plausibilität.

Im Schritt PF4 errechnet die Vorrichtung F-CPU die gesuchte sichere Distanz anhand des vorhergehenden Zusammenhangs hinsichtlich der Signallaufzeit im Funkkanal TOF.

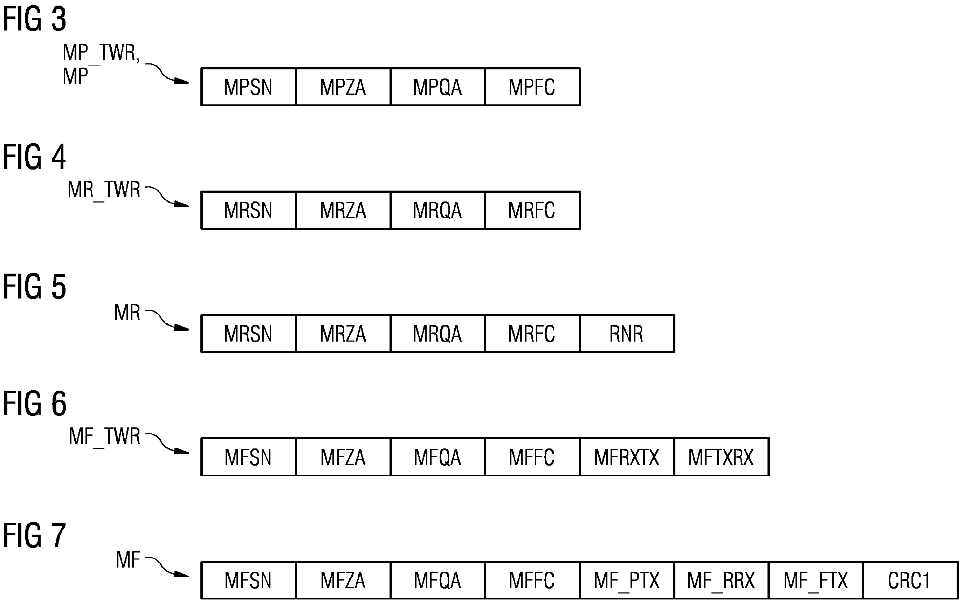

**Fig. 3** stellt beispielhaft eine Abfrage-Nachricht MP_TWR nach dem Stand der Technik für TWR dar, welche Datenelemente für eine Sequenznummer MPSN, eine Ziel-Adresse MPZA, eine Quell-Adresse MPQA und einen Funktions-Code MPFC umfasst, und beispielsweise auch als Abfrage-Nachricht MP im erfindungsgemäßen Verfahren verwendet werden kann.

**Fig. 4** stellt beispielhaft eine Antwort-Nachricht MR_TWR nach dem Stand der Technik für TWR dar, welche Datenelemente für eine Sequenznummer MRSN, eine Ziel-Adresse MRZA, eine Quell-Adresse MRQA und einen Funktions-Code MRFC umfasst.

**Fig. 5** stellt beispielhaft die erfindungsgemäße Antwort-Nachricht MR dar, welche Datenelemente für eine Sequenznummer MRSN, eine Ziel-Adresse MRZA, eine Quell-Adresse MRQA und einen Funktions-Code MRFC umfasst. Der Funktions-Code MRFC kann sich vom Stand der Technik unterscheiden.

Zusätzlich ist die Zufallszahl RNR enthalten.

**Fig. 6** stellt beispielhaft die End-Nachricht MF nach dem Stand der Technik für TWR dar, welche Datenelemente für eine Sequenznummer MFSN, eine Ziel-Adresse MFZA, eine Quell-Adresse MFQA und einen Funktions-Code MFFC umfasst. Der Funktions-Code MFFC kann sich von jenem aus dem Stand der Technik unterscheiden.

Zusätzlich weist die End-Nachricht MF ein Datenelement für eine Zeitdifferenz MFRXTX auf, welche die Zeitdauer zwischen dem Absenden der Abfrage-Nachricht MP und dem Empfangen der Antwort-Nachricht MR seitens des Transponders T bezeichnet.

Außerdem weist die End-Nachricht MF ein Datenelement für eine Zeitdifferenz MFTXRX auf, welche die Zeitdauer zwischen dem Empfangen der Antwort-Nachricht MR und dem Absenden der End-Nachricht MF seitens des Transponders T bezeichnet.

**Fig. 7** stellt beispielhaft die erfindungsgemäße End-Nachricht MP dar, welche Datenelemente für eine Sequenznummer MPSN, eine Ziel-Adresse MPZA, eine Quell-Adresse MPQA und einen Funktions-Code MPFC umfasst. Der Funktions-Code MFFC kann sich von jenem aus dem Stand der Technik unterscheiden.

Die End-Nachricht MP enthält ferner jeweils ein Datenelement in Form eines Zeitstempels für einen Abfrage-Sendezeitpunkt MF_PTX, einen Antwort Empfangszeitpunkt MF_RRX, sowie einen End-Sendezeitpunkt MF_FTX.

Außerdem weist die End-Nachricht MP die erste Prüfsumme CRC1 auf, welche über die Zeitstempel des Transponders T und über die Zufallszahl RNR gebildet ist.

**Bezugszeichenliste:**

| | |
|---|---|
| CG | Zähler Anker-Transponder |
| CRC1, CRC2 | Prüfsumme |
| CT | Zähler Objekt-Transponder |
| $d_{TWR}$ | sichere Distanz |
| F-CPU | fehlersichere Rechenvorrichtung |
| F1-F3 | End-Signal |
| G1, G2, G3 | Ankerpunkte, Gateway |
| GS | Gefahrensystem |
| M | Übertragungs-Medium, Funkkanal |
| MP, MP_TWR | Abfrage-Nachricht, "Pull" |
| MR, MR_TWR | Antwort-Nachricht, "Response" |
| MF_TWR | End-Nachricht, |

| | |
|---|---|
| MPSN, MRSN, MFSN | "Final" fortlaufende Nummer, Sequenznummer |
| MPZA, MRZA, MFZA | Ziel-Adresse |
| MPQA, MRQA, MFQA | Quell-Adresse |
| MPFC, MRFC, MFFC | Funktions-Code |
| MFRXTX, MFTXRX | Zeitdifferenz |
| MF_PTX, MF_RRX, MF_FTX | Zeitpunkt |
| P | Person mit Objekt-Transponder |
| P_F-CPU, P_G, P_T | Verfahren, Programm |
| PF1-PF4 | Verfahrensschritte in der F-CPU |
| PG1-PG3 | Verfahrensschritte im Gateway |
| PT1-PT3 | Verfahrensschritte im Transponder/ Tag |
| P1-P3 | Abfrage-Signal |
| R | Roboter-Arm |
| RNR | Zufallszahl, "random number" |
| R1-R3 | Antwort-Signal |
| S | Schutzzone |
| SS | Schutzsystem |
| T | Objekt-Transponder |
| TOF, $TOF_{G1}$, $TOF_{G2}$, $TOF_{G3}$ | "Time-of-Flight"- Signallaufzeit |
| $TS_{TAG\_TX\_POLL}$, $TS_{TAG\_RX\_RESP}$, $TS_{TAG\_TX\_FINAL}$, $TS_{GW\_RX\_POLL}$, $TS_{GW\_TX\_RESP}$, $TS_{GW\_RX\_FINAL}$ | Zeitstempel |
| $T_{TAG\_REPLY}$, $T_{TAG\_CLK}$, $T_{GW\_REPLY}$, $T_{GW\_CLK}$, $T_{Round1}$, $T_{Round2}$ | Signallaufzeit |
| TWR | "Two-Way-Ranging"-Verfahren |
| WS | Warnsystem |

## Patentansprüche

1. Verfahren zur Bestimmung einer sicheren Distanz ($d_{TWR}$) nach dem TWR-Prinzip zwischen einem drahtlos kommunizierenden Objekt-Transponder (T) und zumindest einem Anker-Gateway (G1-G3), welche jeweils Mittel zur Erfassung von Zeitstempeln aufweisen, **dadurch gekennzeichnet, dass** folgende Schritte ausgeführt werden:

    a) Erfassen von Sende- und Empfangs-Zeitstempeln ($TS_{TAG\_TX\_POLL}$, $TS_{GW\_RX\_POLL}$, $TS_{GW\_TX\_RESP}$, $TS_{TAG\_RX\_RESP}$, $TS_{TAG\_TX\_FINAL}$, $TS_{GW\_RX\_FINAL}$) für eine jeweilige Kommunikations-Nachricht seitens des Transponders (T) und des zumindest einen Anker-Gateways (G1-G3),

    b) Übertragen der jeweiligen Zeitstempel ($TS_{TAG\_TX\_POLL}$, $TS_{GW\_RX\_POLL}$, $TS_{GW\_TX\_RESP}$, $TS_{TAG\_RX\_RESP}$, $TS_{TAG\_TX\_FINAL}$, $TS_{GW\_RX\_FINAL}$) vom Transponder (T) und dem zumindest einen Anker-Gateway (G1-G3) mit zumindest einer jeweiligen Kontrollinformation (CRC1, CRC2) an eine fehlersichere Rechenvorrichtung (F-CPU),

    c) Durchführen von zumindest einer Überprüfung durch die fehlersichere Rechenvorrichtung (F-CPU) ausgewählt aus:

c1) Überprüfung der Richtigkeit der jeweiligen Zeitstempel ($TS_{TAG\_TX\_POLL}$, $TS_{GW\_RX\_POLL}$, $TS_{GW\_TX\_RESP}$, $TS_{TAG\_RX\_RESP}$, $TS_{TAG\_TX\_FINAL}$, $TS_{GW\_RX\_FINAL}$) anhand der zumindest einen Kontrollinformation (CRC1, CRC2),

c2) Überprüfung der errechneten Zeitdauer für die Bearbeitungszeiten des Transponders (T) und jener des zumindest einen Anker-Gateways (G1-G3) anhand bekannter Erfahrungswerte,

d) Bestimmen der sicheren Distanz ($d_{TWR}$) mithilfe der überprüften Zeitstempel ($TS_{TAG\_TX\_POLL}$, $TS_{GW\_RX\_POLL}$, $TS_{GW\_TX\_RESP}$, $TS_{TAG\_RX\_RESP}$, $TS_{TAG\_TX\_FINAL}$, $TS_{GW\_RX\_FINAL}$) durch die fehlersichere Rechenvorrichtung (F-CPU),

wobei bei der Erfassung der Zeitstempel ($TS_{TAG\_TX\_POLL}$, $TS_{GW\_RX\_POLL}$, $TS_{GW\_TX\_RESP}$, $TS_{TAG\_RX\_RESP}$, $TS_{TAG\_TX\_FINAL}$, $TS_{GW\_RX\_FINAL}$) Zeitstempel-Fehler nur durch den Transponder (T) oder alternativ nur durch das eine Anker-Gateway (G1-G3) hervorgerufen werden.

2. Verfahren nach dem vorhergehenden Anspruch, wobei ein Indikatorwert (safe_twr_value) für eine sichere Distanzmessung durch folgenden Zusammenhang mittels der fehlersicheren Rechenvorrichtung (F-CPU) ermittelt wird, welcher ein Maß für die Sicherheit der berechneten sicheren Distanz ($d_{TWR}$) ist:

$$\text{safe\_twr\_value} = \frac{\left(T_{Round1} - T_{GW\_REPLY}\right) - \left(T_{Round2} - T_{TAG\_REPLY}\right)}{2}$$

wobei

$$T_{Round1} = 2 \cdot TOF + T_{GW\_REPLY}$$

$$T_{Round2} = 2 \cdot TOF + T_{TAG\_REPLY}$$

$$T_{GW\_REPLY} = TS_{GW\_TX\_RESP} - TS_{GW\_RX\_POLL}$$

$$T_{TAG\_REPLY} = TS_{TAG\_TX\_FINAL} - TS_{TAG\_RX\_RESP}$$

3. Verfahren nach einem der vorhergehenden Ansprüche, wobei der drahtlosen Kommunikation zwischen dem Objekt-Transponder (T) und dem zumindest einen Anker-Gateway (G1-G3) für eine Lokalisierungs-Abfrage eine Abfrage-, eine Antwort- und eine End-Nachricht (MP, MR, MF) versendet und empfangen wird.

4. Verfahren nach dem vorhergehenden Anspruch, wobei eine Vorgangsnummer (RNR) von der fehlersicheren Rechenvorrichtung (F-CPU) erzeugt wird, welche mit der Antwort-Nachricht (MR) übertragen wird.

5. Verfahren nach dem vorhergehenden Anspruch, wobei die Vorgangsnummer (RNR) eine Zufallszahl ist.

6. Verfahren nach einem der vorhergehenden Ansprüche, wobei die Kontrollinformation (CRC1, CRC2) eine Paritätsinformation ist.

7. Verfahren nach einem der vorhergehenden Ansprüche, wobei bei der Berechnung der Kontrollinformation (CRC1, CRC2) eine Kommunikations-Adresse des Objekt-Transponder (T) oder des zumindest einen Anker-Gateway (G1-G3) berücksichtigt wird.

8. Verfahren nach einem der vorhergehenden Ansprüche, wobei zu einem ersten und einem zweiten Zeitpunkt jeweils sichere Distanzen ($d_{TWR}$) bestimmt werden, aus welchen eine Bewegungsgeschwindigkeit des Transponders (T) ermittelt wird, und die Bewegungsgeschwindigkeit mit einem vordefinierten Grenzwert verglichen wird.

9. Vorrichtung zur Bestimmung einer sicheren Distanz ($d_{TWR}$) nach dem TWR-Prinzip zwischen einem drahtlos kommunizierenden Objekt-Transponder (T) und zumindest einem Anker-Gateway (G1-G3), welche jeweils Mittel zur Erfassung von Zeitstempeln aufweisen, **dadurch gekennzeichnet, dass** die Schritte des Verfahrens nach einem der vorhergehenden Ansprüche ausgeführt werden.

FIG 1

FIG 2

## FIG 3

MP_TWR,
MP

| MPSN | MPZA | MPQA | MPFC |
|------|------|------|------|

## FIG 4

MR_TWR

| MRSN | MRZA | MRQA | MRFC |
|------|------|------|------|

## FIG 5

MR

| MRSN | MRZA | MRQA | MRFC | RNR |
|------|------|------|------|-----|

## FIG 6

MF_TWR

| MFSN | MFZA | MFQA | MFFC | MFRXTX | MFTXRX |
|------|------|------|------|--------|--------|

## FIG 7

MF

| MFSN | MFZA | MFQA | MFFC | MF_PTX | MF_RRX | MF_FTX | CRC1 |
|------|------|------|------|--------|--------|--------|------|

EP 3 835 821 A1

Europäisches Patentamt
European Patent Office
Office européen des brevets

**EUROPÄISCHER RECHERCHENBERICHT**

Nummer der Anmeldung

EP 19 21 5728

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | "Information technology -- Real time locating systems (RTLS) -- Part 62: High rate pulse repetition frequency Ultra Wide Band (UWB) air interface", ISO/IEC 24730-62:2013, IEC, 3, RUE DE VAREMBÉ, PO BOX 131, CH-1211 GENEVA 20, SWITZERLAND, 26. August 2013 (2013-08-26), Seiten 1-57, XP082006036, [gefunden am 2013-08-26] | 1,3,6,9 | INV. G01S11/02 G01S13/74 H04L9/32 H04L29/06 ADD. F16P3/14 G06F21/64 H04W12/00 |
| Y | * Kapitel "Introduction" * | 7,8 | |
| A | * Kapitel 4.3 *  * Kapitel 5.3.6 und 5.3.6.2 *  * Kapitel 5.6 *  * Kapitel 6, 6.1 und 6.1.1 *  * Kapitel 8, 8.1, 8.2, 8.2.1 und 8.2.6 *  * Annex A.1 * | 2,4,5 | |
| | ----- | | |
| X | CN 108 834 071 A (XIAN WEIDE HUITONG IND AUTOMATION CO LTD) 16. November 2018 (2018-11-16) | 1,3,6,9 | |
| Y | * Absatz [0013] - Absatz [0027] * | 7,8 | RECHERCHIERTE SACHGEBIETE (IPC) |
| A | | 2,4,5 | G01S F16P |
| | ----- | | H04L G06F |
| X | US 8 325 704 B1 (LEMKIN MARK [US] ET AL) 4. Dezember 2012 (2012-12-04) | 1,3,6,9 | H04W |
| Y | * Abbildungen 6A, 6B, 9A, 9B * | 7,8 | |
| A | * Spalte 1, Zeile 16 - Zeile 55 *  * Spalte 3, Zeile 1 - Spalte 5, Zeile 32 *  * Spalte 9, Zeile 14 - Zeile 19 *  * Spalte 10, Zeile 20 - Zeile 59 * | 2,4,5 | |
| | ----- | | |
| Y | US 2006/160540 A1 (STRUTT GUENAEL [US] ET AL) 20. Juli 2006 (2006-07-20) | 8 | |
| A | * Zusammenfassung *  * Absatz [0020] - Absatz [0039] * | 1-7,9 | |
| | ----- | | |
| | -/-- | | |

Der vorliegende Recherchenbericht wurde für alle Patentansprüche erstellt

| Recherchenort | Abschlußdatum der Recherche | Prüfer |
|---|---|---|
| München | 29. Juni 2020 | Haugg, Sabine |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes Dokument

EPO FORM 1503 03.82 (P04C03)

Seite 1 von 3

Europäisches Patentamt

European Patent Office

Office européen des brevets

# EUROPÄISCHER RECHERCHENBERICHT

Nummer der Anmeldung

EP 19 21 5728

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | HAKYONG KIM: "A ranging scheme for asynchronous location positioning systems", POSITIONING, NAVIGATION AND COMMUNICATION, 2009. WPNC 2009. 6TH WORKSHOP ON, IEEE, PISCATAWAY, NJ, USA, 19. März 2009 (2009-03-19), Seiten 89-94, XP031452377, DOI: 10.1109/WPNC.2009.4907809 ISBN: 978-1-4244-3292-9 * Zusammenfassung * * chapter "I. Introduction" * * chapter "II. Ranging by SDS-TWR" * ----- | 1-9 | |
| A | JP 2018 155679 A (MEIDENSHA ELECTRIC MFG CO LTD) 4. Oktober 2018 (2018-10-04) * Absatz [0012] - Absatz [0016] * ----- | 1-9 | |
| A | WO 2015/183965 A1 (QUALCOMM INC [US]) 3. Dezember 2015 (2015-12-03) * Zusammenfassung * * Absatz [0027] - Absatz [0032] * * Absatz [0042] * * Absatz [0046] * ----- -/-- | 1-9 | RECHERCHIERTE SACHGEBIETE (IPC) |

Der vorliegende Recherchenbericht wurde für alle Patentansprüche erstellt

| Recherchenort | Abschlußdatum der Recherche | Prüfer |
|---|---|---|
| München | 29. Juni 2020 | Haugg, Sabine |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

...............................................................................
& : Mitglied der gleichen Patentfamilie, übereinstimmendes Dokument

EPO FORM 1503 03.82 (P04C03)

Europäisches Patentamt

European Patent Office

Office européen des brevets

## EUROPÄISCHER RECHERCHENBERICHT

Nummer der Anmeldung

EP 19 21 5728

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | OSHIGA OMOTAYO ET AL: "Optimized super-resolution ranging over ToA measurements", 2014 IEEE WIRELESS COMMUNICATIONS AND NETWORKING CONFERENCE (WCNC), IEEE, 6. April 2014 (2014-04-06), Seiten 2976-2981, XP032682597, DOI: 10.1109/WCNC.2014.6952931 [gefunden am 2014-11-11] * Seite 2976 * * Abbildungen 1, 2 * * Seite 2978, rechte Spalte, Absatz 3. - Absatz 4. * * Seite 2979, rechte Spalte, Absatz 1. * | 1-9 | |
| A | US 2008/250147 A1 (KNIBBELER CHARLES LEONARDUS CORNELIS MARIA [NL] ET AL) 9. Oktober 2008 (2008-10-09) * Zusammenfassung * * Absatz [0001] - Absatz [0008] * * Absatz [0063] - Absatz [0070] * | 1-9 | |
| A | PIRAMUTHU ET AL: "Protocols for RFID tag/reader authentication", DECISION SUPPORT SYSTEMS, ELSEVIER SCIENCE PUBLISHERS, AMSTERDAM, NL, Bd. 43, Nr. 3, 1. April 2007 (2007-04-01), Seiten 897-914, XP024339761, ISSN: 0167-9236, DOI: 10.1016/J.DSS.2007.01.003 [gefunden am 2007-03-27] * das ganze Dokument * | 4,5,7 | RECHERCHIERTE SACHGEBIETE (IPC) |
| Y | US 2013/286960 A1 (LI YING [US] ET AL) 31. Oktober 2013 (2013-10-31) | 7 | |
| A | * Absatz [0186] - Absatz [0188] * | 4,5 | |

Der vorliegende Recherchenbericht wurde für alle Patentansprüche erstellt

| Recherchenort | Abschlußdatum der Recherche | Prüfer |
|---|---|---|
| München | 29. Juni 2020 | Haugg, Sabine |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
......................................................................
& : Mitglied der gleichen Patentfamilie, übereinstimmendes Dokument

EPO FORM 1503 03.82 (P04C03)

Europäisches
Patentamt

European
Patent Office

Office européen
des brevets

Nummer der Anmeldung

EP 19 21 5728

## GEBÜHRENPFLICHTIGE PATENTANSPRÜCHE

Die vorliegende europäische Patentanmeldung enthielt bei ihrer Einreichung Patentansprüche, für die eine Zahlung fällig war.

☐ Nur ein Teil der Anspruchsgebühren wurde innerhalb der vorgeschriebenen Frist entrichtet. Der vorliegende europäische Recherchenbericht wurde für jene Patentansprüche erstellt, für die keine Zahlung fällig war, sowie für die Patentansprüche, für die Anspruchsgebühren entrichtet wurden, nämlich Patentansprüche:

☐ Keine der Anspruchsgebühren wurde innerhalb der vorgeschriebenen Frist entrichtet. Der vorliegende europäische Recherchenbericht wurde für die Patentansprüche erstellt, für die keine Zahlung fällig war.

## MANGELNDE EINHEITLICHKEIT DER ERFINDUNG

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

Siehe Ergänzungsblatt B

☒ Alle weiteren Recherchengebühren wurden innerhalb der gesetzten Frist entrichtet. Der vorliegende europäische Recherchenbericht wurde für alle Patentansprüche erstellt.

☐ Da für alle recherchierbaren Ansprüche die Recherche ohne einen Arbeitsaufwand durchgeführt werden konnte, der eine zusätzliche Recherchengebühr gerechtfertigt hätte, hat die Recherchenabteilung nicht zur Zahlung einer solchen Gebühr aufgefordert.

☐ Nur ein Teil der weiteren Recherchengebühren wurde innerhalb der gesetzten Frist entrichtet. Der vorliegende europäische Recherchenbericht wurde für die Teile der Anmeldung erstellt, die sich auf Erfindungen beziehen, für die Recherchengebühren entrichtet worden sind, nämlich Patentansprüche:

☐ Keine der weiteren Recherchengebühren wurde innerhalb der gesetzten Frist entrichtet. Der vorliegende europäische Recherchenbericht wurde für die Teile der Anmeldung erstellt, die sich auf die zuerst in den Patentansprüchen erwähnte Erfindung beziehen, nämlich Patentansprüche:

☐ Der vorliegende ergänzende europäische Recherchenbericht wurde für die Teile der Anmeldung erstellt, die sich auf die zuerst in den Patentansprüchen erwähnte Erfindung beziehen (Regel 164 (1) EPÜ).

Europäisches
Patentamt

European
Patent Office

Office européen
des brevets

**MANGELNDE EINHEITLICHKEIT
DER ERFINDUNG
ERGÄNZUNGSBLATT B**

**Nummer der Anmeldung**

EP 19 21 5728

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

1. Ansprüche: 1, 3, 6, 8, 9

   Erkennen grober Mess- oder Rechenfehler
   ---

2. Anspruch: 2

   Ermittlung eines Indikatorwertes für die Genauigkeit der ermittelten Distanz
   ---

3. Ansprüche: 4, 5, 7

   Erhöhung der Manipulationssicherheit
   ---

**ANHANG ZUM EUROPÄISCHEN RECHERCHENBERICHT
ÜBER DIE EUROPÄISCHE PATENTANMELDUNG NR.**

EP 19 21 5728

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

29-06-2020

| Im Recherchenbericht angeführtes Patentdokument | Datum der Veröffentlichung | Mitglied(er) der Patentfamilie | Datum der Veröffentlichung |
|---|---|---|---|
| CN 108834071 A | 16-11-2018 | KEINE | |
| US 8325704 B1 | 04-12-2012 | KEINE | |
| US 2006160540 A1 | 20-07-2006 | CN 101444134 A | 27-05-2009 |
| | | EP 1832127 A2 | 12-09-2007 |
| | | JP 4413970 B2 | 10-02-2010 |
| | | JP 2008526168 A | 17-07-2008 |
| | | KR 20070087227 A | 27-08-2007 |
| | | US 2006160540 A1 | 20-07-2006 |
| | | WO 2006073816 A2 | 13-07-2006 |
| JP 2018155679 A | 04-10-2018 | KEINE | |
| WO 2015183965 A1 | 03-12-2015 | JP 6275880 B2 | 07-02-2018 |
| | | JP 2017522776 A | 10-08-2017 |
| | | KR 20160143861 A | 14-12-2016 |
| | | US 2015350850 A1 | 03-12-2015 |
| | | WO 2015183965 A1 | 03-12-2015 |
| US 2008250147 A1 | 09-10-2008 | CN 101023651 A | 22-08-2007 |
| | | EP 1792469 A1 | 06-06-2007 |
| | | JP 4861327 B2 | 25-01-2012 |
| | | JP 2008514085 A | 01-05-2008 |
| | | KR 20070065385 A | 22-06-2007 |
| | | US 2008250147 A1 | 09-10-2008 |
| | | WO 2006030341 A1 | 23-03-2006 |
| US 2013286960 A1 | 31-10-2013 | CN 104620551 A | 13-05-2015 |
| | | CN 109889246 A | 14-06-2019 |
| | | EP 2845356 A1 | 11-03-2015 |
| | | JP 6313282 B2 | 18-04-2018 |
| | | JP 2015523757 A | 13-08-2015 |
| | | KR 20150015447 A | 10-02-2015 |
| | | US 2013286960 A1 | 31-10-2013 |
| | | WO 2013165149 A1 | 07-11-2013 |

EPO FORM P0461

Für nähere Einzelheiten zu diesem Anhang : siehe Amtsblatt des Europäischen Patentamts, Nr.12/82